# NEW EUROPEAN PATENT SPECIFICATION

(11) **EP 2 353 859 B2**
(45) Date of publication and mention of the opposition decision: **16.03.2022**
(45) Mention of the grant of the patent: 08.03.2017
(21) Application number: 11000487.6
(22) Date of filing: 21.01.2011
(51) Int. Cl.: B31F 1/07

(54) **Paper product with three or more plies and method for manufacturing it**
Papierprodukt mit drei oder mehr Lagen und Herstellungsverfahren dafür
Produit en papier avec trois plis ou plus et son procédé de fabrication

(30) Priority: 28.01.2010 IT MI20100116
(43) Date of publication of application: 10.08.2011
(60) Divisional application: 16205562.8
(73) Proprietor: Industrie Cartarie Tronchetti S.p.A., 55023 Borgo a Mozzano (Lucca) (IT)
(72) Inventor: Nofori, Massimo, 55100 Lucca (IT)
(74) Representative: Forattini, Amelia

(56) References cited:
- EP-A2- 1 609 589
- WO-A1-03/072344
- WO-A2-2005/085526
- US-A- 4 320 162
- US-A1- 2001 019 756
- US-A1- 2003 129 363
- US-A1- 2004 247 836
- US-A1- 2005 103 456

## Description

The present invention relates to a method for manufacturing a paper product, namely toilet paper, kitchen towels, napkins and handkerchiefs, with three or more plies.

Those products are generally manufactured by using embossing, a mechanical operation that consists in reproducing designs or patterns in relief on the surface of the paper.

Embossing is used essentially to decorate the products and most of all to improve their most important functional characteristics, such as softness, absorbing capacity and thickness.

Typically, a common tissue product, such as toilet paper or kitchen paper, is made of two or more plies of paper which are embossed separately and subsequently joined to each other by applying glue and laminating the plies between rollers that define a lamination nip.

Embossing is normally performed by passing the paper ply between a steel embossing roller provided with protrusions and a presser roller that is typically made of rubber.

In other cases, embossing is performed by means of two steel rollers, of which a first one is provided with protrusions that correspond to the recesses of the second roller.

It is known to manufacture those types of product with a smooth intermediate ply, a flat middle ply, which is arranged between two outer plies, which are embossed separately in order to form protrusions that extend inward, i.e. toward the middle ply.

The three plies are made to pass between two steel rollers, which press with a force that is sufficient to join them even without glue.

Such ply joining system causes early wear of the steel rollers, because the rollers are subjected to considerable stress.

According to another production method, the outer plies are joined to the flat middle ply by means of glue spots. The glue is applied to the middle ply before passing between the two steel rollers.

Due to slippages of the middle ply, such joining system can cause smudging of the gluing spots, which might be particularly evident when colored glue is used.

EP-1609589-A2 discloses a printed and embossed paper napkin comprising two outer embossed plies and an optional third middle ply, possibly micro-embossed.

US-2005/103456-A1 discloses an apparatus and method for embossing a multiply paper product by means of two embossing units wherein the first embossing unit is constituted by two or more separate embossing sections.

The aim of the present invention is to provide a method for manufacturing paper products with three or more plies that overcomes the drawbacks of the cited prior art.

Within the scope of this aim, an object of the invention is to provide for a method for manufacturing a product with three or more plies in which the middle ply or plies are glued to the outer plies without smudging.

This aim and these objects, as well as others that will become better apparent hereinafter, are achieved by a method for manufacturing a paper product with three or more plies, as claimed in claim 1. Further advantageous features of the invention are set out in the dependent claims.

Further characteristics and advantages will become better apparent from the description of preferred but not exclusive embodiments of the invention, illustrated by way of non-limiting example in the accompanying drawings, wherein:
Figure 1 is a sectional view of a three-ply paper product, manufactured according to the method of the invention;
Figure 2 is a schematic view of the system for manufacturing the product of figure 1;
Figure 3 is a sectional view of a four-ply paper product, manufactured according to the method of the invention;
Figure 4 is a schematic view of the apparatus for manufacturing the product of figure 3;
Figure 5 is a sectional view of another four-ply product, manufactured according to the method of the invention;
Figure 6 is a schematic view of the apparatus for manufacturing the product of figure 5;
Figure 7 is a sectional view of a five-ply paper product, manufactured according to the method of the invention;
Figure 8 is a schematic view of the apparatus for manufacturing the product of figure 7.

With reference to the cited figures, a paper product with three or more plies manufactured according to the method of the invention, generally designated by the reference numeral 1, comprises a first outer embossed ply 2, a second outer embossed ply 3 and an embossed middle ply 4.

The first outer embossed ply 2 has a first set of protrusions 21 and a second set of protrusions 22 obtained by means of a first embossing step.

The protrusions of the second set 22 are higher than the protrusions of the first set 21. The difference in height can preferably be from 0.05 mm up to 1 mm.

The second set of protrusions 22 corresponds to a set of intermediate protrusions 42 which are provided on the middle ply 4 during a second operation of second embossing of the first outer ply 2.

The first outer ply 2 and the middle ply 4 are glued at their second set of protrusions 22 and 42.

The second outer ply 3 has a first set of protrusions 31, which are obtained in a first step of embossing of the second outer ply.

The first outer ply 2 and the middle ply 4 are mated to the second outer ply 3 by lamination.

The method for manufacturing the paper product 1 comprises passing the first outer ply through a first steel embossing roller 10, which acts together with a first rubber roller 11, creating the first and second sets of protrusions 21 and 22.

The first outer ply 2 and the middle ply 4, which is not yet embossed, then pass through a second rubber roller 12, which acts on the two plies 2 and 4 with less pressure than the first rubber embossing roller 11, so that the plies 2 and 4 arrive at lamination, or at gluing, already nested, preventing possible slippages, which in the case of colored glue would cause esthetically unpleasant smudges.

The gluing step is performed by means of a cliché roller 13, which is part of an applicator 14.

The second outer ply 3 is embossed by means of a second steel embossing roller 15, which acts together with a third rubber roller 16, creating the protrusions 31.

All the plies then pass through a fourth mating roller 17 where they are joined by lamination, producing the final paper product 1.

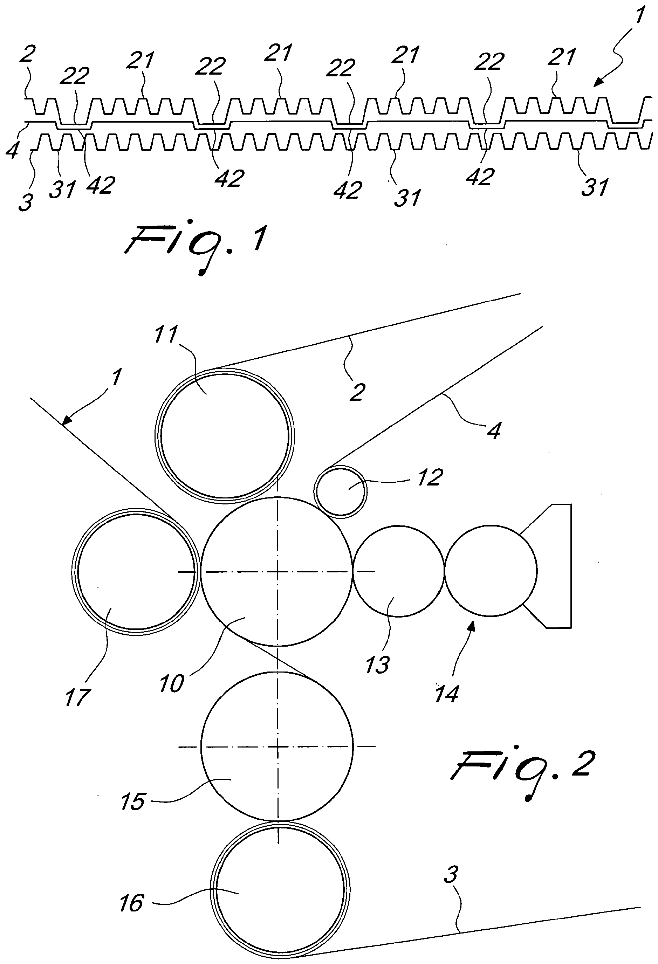

The embodiment shown in Figures 1 and 2 illustrates a nested assembly, which joins the first two plies 2 and 4 in register on the first steel roller 10 without being in register with the second steel roller 15, i.e. with a random or "DERL" registration.

The method according to the present invention may also comprise the two steel rollers 10 and 15 in register, "pin to pin".

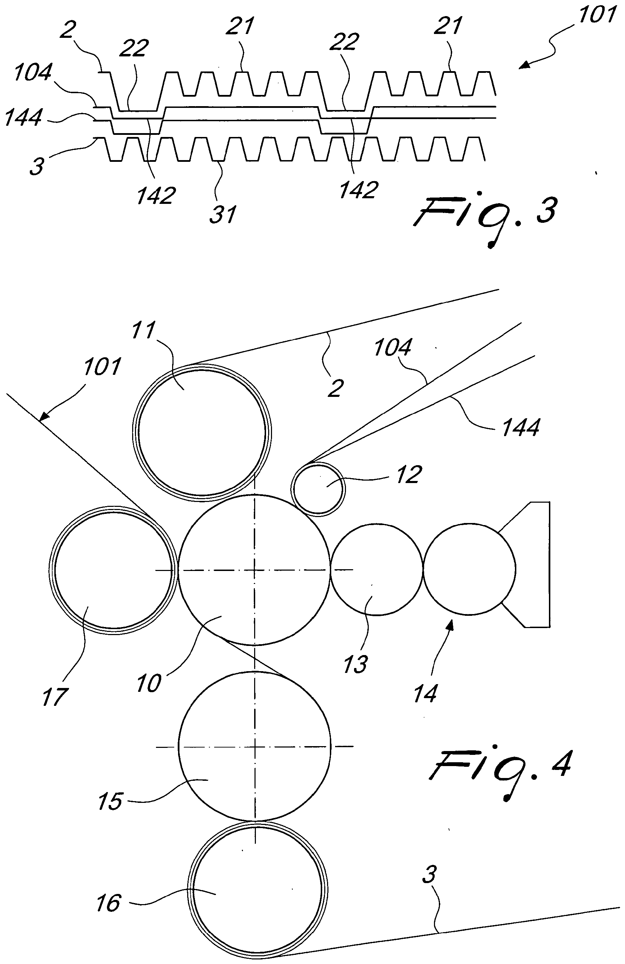

Figures 3 and 4 illustrate a method for manufacturing a four-ply paper product, designated by the reference numeral 101.

The paper product 101 is constituted by a first outer embossed ply 2, a second outer embossed ply 3, a first middle ply 104 and a second middle ply 144.

The first outer embossed ply 2 has a first set of protrusions 21 and a second set of protrusions 22 obtained by means of a first embossing step.

The protrusions of the second set 22 are higher than the protrusions of the first set 21. The difference in height can preferably be from 0.05 mm to 1 mm.

The second set of protrusions 22 corresponds to a set of intermediate protrusions 142 provided on the middle plies 104 and 144 during a second embossing operation.

The first outer ply 2 and the first middle ply 104 are glued at their second set of protrusions 22 and 142.

The second outer ply 3 has the first set of protrusions 31, obtained in a first step of embossing of the second outer ply.

The first outer ply 2 and the intermediate plies 104 and 144 are mated to the second outer ply 3 by lamination.

The method for manufacturing the paper product 101 comprises passing the first outer ply through a first steel embossing roller 10, which acts together with a first rubber roller 11, creating the first and second sets of protrusions 21 and 22.

The first outer ply 2 and the two intermediate plies 104 and 144, not yet embossed, then pass through a second rubber roller 12, which acts on the three plies 2, 104 and 144 with less pressure than the first rubber embossing roller 11, so that the plies 2, 104 and 144 arrive at lamination, or at gluing, already nested, preventing possible slippages which, in the case of colored glue, would cause esthetically unpleasant smudges.

The gluing step is performed by means of a cliché roller 13, which is part of an applicator unit 14.

The second outer ply 3 is embossed by means of a second steel embossing roller 15, which acts together with a third rubber roller 16, creating the protrusions 31.

All the plies then pass through a fourth rubber roller 17 where they are joined by lamination, producing the final paper product 101.

The embodiment shown in Figures 3 and 4 represents a "nested" assembly, which joins the first three plies 2, 104 and 144 in register on the first steel roller 10 without being in register with the second steel roller 15, i.e. with a random or "DERL" registration.

The method according to the present invention may also comprises the two steel rollers 10 and 15 in register, "pin to pin".

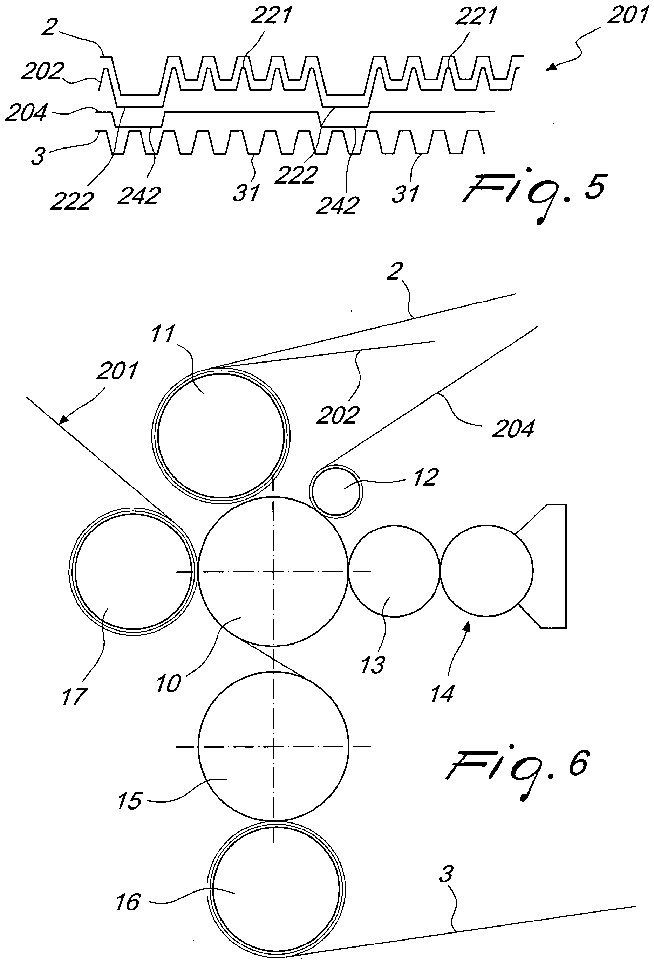

Figures 5 and 6 illustrate a method for manufacturing a four-ply paper product, designated by the reference numeral 201.

The paper product 201 is constituted by a first outer embossed ply 2, a second outer embossed ply 3, a first embossed middle ply 202 and a second embossed middle ply 204.

The first outer embossed ply 2 and the first middle ply 202 have a first set of protrusions 221 and a second set of protrusions 222 obtained by means of a first embossing step.

The protrusions of the second set 222 are higher than the protrusions of the first set 221. The difference in height can preferably be from 0.05 mm to 1 mm.

The second set of protrusions 222 corresponds to a set of protrusions 242 provided on the second middle ply 204 during a second embossing operation.

The first outer ply 2, the first middle ply 202 and the second middle ply 204 are glued at their second sets of protrusions 222 and 242.

The second outer ply 3 has a first set of protrusions 31 obtained in a first step of embossing of the second outer ply.

The first outer ply 2 and the intermediate plies 202 and 204 are mated to the second outer ply 3 by lamination.

The method for manufacturing the paper product 201 comprises passing the first outer ply 2 and the first middle ply 202 through a first steel embossing roller 10, which acts together with a first rubber roller 11, creating the first and second sets of protrusions 221 and 222.

The first outer ply 2 mated to the first middle ply 202 and the second middle ply 204, which has not yet been embossed, then pass through a second rubber roller 12, which acts on the three plies 2, 202 and 204 with less pressure than the first rubber embossing roller 11, so that the plies 2, 202 and 204 arrive at lamination, or at gluing, already nested, preventing possible slippages which, in the case of colored glue, would cause esthetically unpleasant smudges.

The gluing step is performed by means of a cliché roller 13, which is part of an applicator 14.

The second outer ply 3 is embossed by means of a second steel embossing roller 15, which acts together with a third rubber roller 16, creating the protrusions 31.

All the plies then pass through a fourth rubber roller 17 where they are joined by lamination, producing the final product 201.

The embodiment shown in Figures 5 and 6 illustrates a nested assembly which joins the first three plies 2, 202 and 204 in register on the first steel roller 10 without being in register with the second steel roller 15, i.e. with a random or "DERL" registration.

The method according to the present invention may also comprise the two steel rollers 10 and 15 in register, "pin to pin".

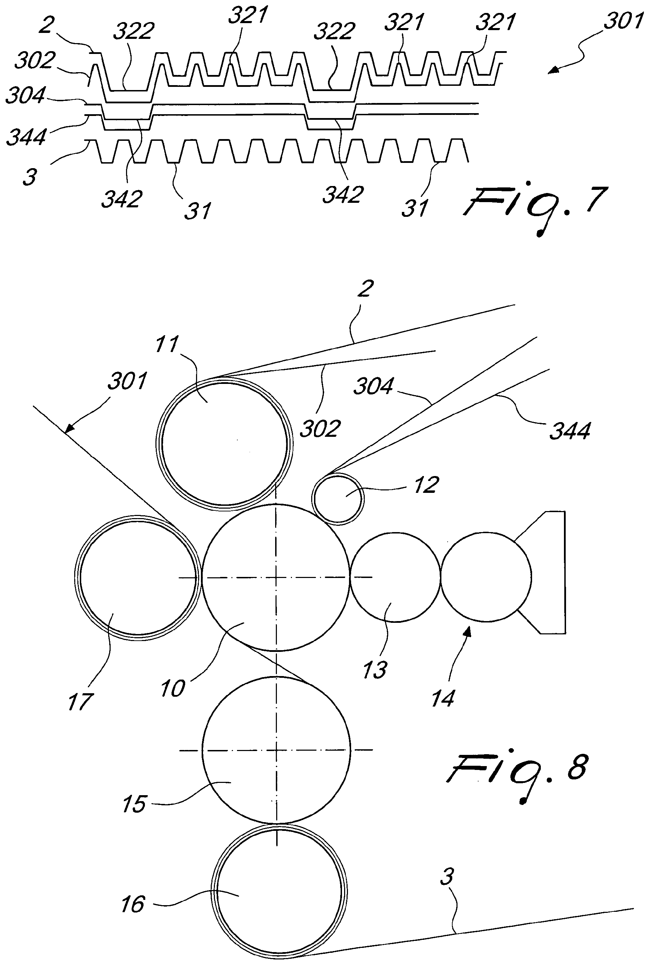

Figures 7 and 8 illustrate a method for manufacturing a five-ply paper product, designated by the reference numeral 301.

The paper product 301 is constituted by a first outer embossed ply 2, a second outer embossed ply 3, a first embossed middle ply 302, a second embossed middle ply 304 and a third embossed middle ply 344.

The first outer embossed ply 2 and the first middle ply 302 have a first set of protrusions 321 and a second set of protrusions 322 obtained by means of a first embossing step.

The protrusions of the second set 322 are higher than the protrusions of the first set 321. The difference in height can be from 0.05 mm up to 1 mm.

The second set of protrusions 322 corresponds to a set of protrusions 342 provided on the second middle ply 304 and on the third middle ply 344 during a second embossing operation.

The first outer ply 2, the first middle ply 302, the second middle ply 304 and the third middle ply 344 are glued at their second sets of protrusions 322 and 342.

The second outer ply 3 has a first set of protrusions 31 obtained in a first step of embossing of the second outer ply.

The first outer ply 2 and the intermediate plies 302, 304 and 244 are mated to the second outer ply 3 by lamination.

The method for manufacturing the paper product 301 comprises passing the first outer ply 2 and the first middle ply 302 through a first steel embossing roller 10, which acts together with a first rubber roller 11, creating the first and second sets of protrusions 321 and 322.

The first outer ply 2 mated to the first middle ply 302 and the second middle ply 304 mated to the third middle ply 344, which are not yet embossed, then pass through a second rubber roller 12, which acts on the four plies 2, 302, 304 and 344 with less pressure than the first rubber embossing roller 11, so that the plies 2, 302, 304 and 344 arrive at lamination, or at gluing, already nested, preventing possible slippages, which in the case of colored glue, would give rise to esthetically unpleasant smudges.

The gluing step is performed by means of a cliché roller 13, which belongs to an applicator unit 14.

The second outer ply 3 is embossed by means of a second steel embossing roller 15, which acts together with a third rubber embossing roller 16, creating the protrusions 31.

All the plies then pass through a fourth rubber roller 17 where they are joined by lamination, producing the final paper product 301.

The embodiment shown in Figures 7 and 8 illustrates a nested assembly, which joins the first four plies 2, 302, 304 and 344 in register on the first steel roller 10 without being in register with the second steel roller 15, i.e. with a random or "DERL" registration.

The method according to the present invention may also comprise the two steel rollers 10 and 15 in register, "pin to pin".

In practice it has been found that the invention achieves the intended aim and objects, providing a method for manufacturing a paper product with three or more plies in which one of the two groups of embossing rollers has a second rubber embossing roller which acts on the two plies, the outer one and the middle one, with less pressure than the main rubber embossing roller.

The joining of plies with the production method according to the present invention is achieved by using embossing and lamination assemblies of the "pin to pin", "DERL", embossing-gluing type.

## Claims

1. A method for manufacturing a paper product, namely toilet paper, kitchen towels, napkins and handkerchiefs, with three or more plies, comprising the steps of:
a) passing a first outer ply (2) through a first steel embossing roller (10), which acts together with a first rubber roller (11), creating a first set of protrusions (21) and a second set of protrusions (22); said protrusions of the second set (22) are higher than said protrusions of the first set (21);
b) passing said first outer ply (2) through a second rubber roller (12), which acts, together with said first steel embossing roller (10), with less pressure than said first rubber embossing roller;
said method being **characterized in that**
said first outer ply (2) is passed through said second rubber roller (12) together with a middle ply (4, 104, 144, 204, 304, 344), which has not yet been embossed; said second rubber roller (12) acting together with said first steel embossing roller (10) on said two plies (2, 4, 104, 144, 204, 304, 344) with less pressure than said first rubber embossing roller (11), so that said plies (2, 4, 104, 144, 204, 304, 344) reach a subsequent gluing step in an already nested state; said method further comprising the steps of
c) gluing said plies (2, 4, 104, 144, 204, 304, 344) by means of a cliché roller (13);
d) embossing a second outer ply (3) by means of a second steel embossing roller (15), which acts together with a third rubber roller (16);
e) passing all of said plies through a fourth mating roll (17).

2. The method according to claim 1, **characterized in that** said step b) comprises the passage of two mated middle plies (104, 144, 304, 344).

3. The method according to claim 1, **characterized in that** said step a) comprises passing said first outer ply (2) mated to a first middle ply (202).

4. The method according to claim 1, **characterized in that** said step a) comprises passing said first outer ply (2) mated to a first middle ply (302) and said step b) comprises passing a second (304) and a third middle ply (344) which are mated.

5. The method according to one or more of claims 1-4, **characterized in that** said steps a) and d) are provided without said first steel roller (10) being in register with said second steel roller (15), i.e. with a random or "DERL" registration.

6. The method according to one or more of claims 1-4, **characterized in that** said steps a) and d) are provided with said first steel roller (10) in register with said second steel roller (15), with a "pin to pin" system.

## Patentansprüche

1. Ein Verfahren zur Herstellung eines Papierprodukts, nämlich Toilettenpapier, Küchenpapier, Servietten und Taschentüchern, mit drei oder mehr Lagen, das folgende Schritte umfasst:
a) Durchführen einer ersten äußeren Lage (2) durch eine erste Stahl-Prägewalze (10), die mit einer ersten Gummiwalze (11) zusammenwirkt, wodurch ein erster Satz von Vorsprüngen (21) und ein zweiter Satz von Vorsprüngen (22) erzeugt werden; die Vorsprünge des zweiten Satzes (22) sind höher als die Vorsprünge des ersten Satzes (21) ;
b) Durchführen der ersten äußeren Lage (2) durch eine zweite Gummiwalze (12), die mit der ersten SLahl-Prägewalze (10) mit geringerem Druck zusammenwirkt als die erste Gummiwalze;
wobei das Verfahren **dadurch gekennzeichnet ist, dass** die erste äußere Lage (2) durch die zweite Gummiwalze (12) zusammen mit einer mittleren Lage (4, 104, 144, 204, 304, 344) geführt wird, die noch nicht geprägt wurde;
wobei die zweite Gummiwalze (12) gemeinsam mit der ersten Stahl-Prägewalze (10) auf die zwei Lagen (2, 4, 104, 144, 204, 304, 344) mit geringerem Druck einwirkt als die erste Gummi-Prägewalze (11), so dass die Lagen (2, 4, 104, 144, 204, 304, 344) einen anschließenden Klebeschritt in bereits verschachteltem Zustand erreichen;
wobei das Verfahren weiter folgende Schritte umfasst:
c) Verkleben der Lagen (2, 4, 104, 144, 204, 304, 344) mit Hilfe einer Klischeewalze (13);
d) Prägen einer zweiten äußeren Lage (3) mit Hilfe einer zweiten Stahl-Prägewalze (15), die mit einer dritten Gummiwalze (16) zusammenwirkt;
e) Durchführen aller Lagen durch eine vierte Gegenwalze (17).

2. Das Verfahren gemäß Anspruch 1, **dadurch gekennzeichnet, dass** der Schritt b) das Durchführen zweier verbundener mittlerer Lagen (104, 144, 304, 344) umfasst.

3. Das Verfahren gemäß Anspruch 1, **dadurch gekennzeichnet, dass** der Schritt a) das Durchführen der ersten äußeren Lage (2), verbunden mit einer ersten mittleren Lage (202), umfasst.

4. Das Verfahren gemäß Anspruch 1, **dadurch gekennzeichnet, dass** der Schritt a) das Durchführen der ersten äußeren Lage (2), verbunden mit einer ersten mittleren Lage (302), umfasst, und der Schritt b) das Durchführen einer zweiten (304) und einer dritten mittleren Lage (344), die verbunden sind, umfasst.

5. Das Verfahren gemäß einem oder mehreren der Ansprüche 1-4, **dadurch gekennzeichnet, dass** die Schritte a) und d) durchgeführt werden, ohne dass die erste Stahlwalze (10) mit der zweiten Stahlwalze (15) abgeglichen ist, d. h. mit einem zufälligen oder "DERL"-Abgleich.

6. Das Verfahren gemäß einem oder mehreren der Ansprüche 1-4, **dadurch gekennzeichnet, dass** die Schritte a) und d) durchgeführt werden, wobei die erste Stahlwalze (10) mit der zweiten Stahlwalze (15) abgeglichen ist, mit einem "Stift-zu-Stift-"System.

## Revendications

1. Procédé de fabrication d'un produit en papier, à savoir papier hygiénique, essuie-tout, serviettes de table et mouchoirs, avec trois couches ou plus, comprenant les étapes consistant à:
a) faire passer une première couche extérieure (2) à travers un premier rouleau de gaufrage en acier (10), qui fonctionne conjointement avec un premier rouleau en caoutchouc (11), en créant un premier ensemble de protubérances (21) et un second ensemble de protubérances (22); lesdites protubérances du second ensemble (22) sont plus hautes que lesdites protubérances du premier ensemble (21);
b) faire passer ladite première couche extérieure (2) à travers un second rouleau en caoutchouc (12), qui fonctionne, conjointement audit premier rouleau de gaufrage en acier (10), avec moins de pression que ledit premier rouleau de gaufrage en caoutchouc;
ledit procédé étant **caractérisé en ce que**
ladite première couche extérieure (2) est passée à travers ledit second rouleau en caoutchouc (12) conjointement à une centrale couche (4, 104, 144, 204, 304, 344), qui n'a pas encore été gaufré; ledit second rouleau en caoutchouc (12) fonctionnant conjointement audit premier rouleau de gaufrage en acier (10) sur lesdites deux couches (2, 4, 104, 144, 204, 304, 344) avec moins de pression que ledit premier rouleau de gaufrage en caoutchouc (11), de sorte que lesdites couches (2, 4, 104, 144, 204, 304, 344) atteignent une étape de collage suivante dans un état déjà emboîté;
ledit procédé comprenant en outre les étapes consistant à:
c) coller lesdites couches (2, 4, 104, 144, 204, 304, 344) au moyen d'un rouleau de cliché (13);
d) gaufrer une seconde couche extérieure (3) au moyen d'un second rouleau de gaufrage en acier (15), qui fonctionne conjointement à un troisième rouleau en caoutchouc (16);
e) faire passer toutes lesdites couches à travers un quatrième rouleau conjugué(17).

2. Procédé selon la revendication 1, **caractérisé en ce que** ladite étape b) comprend le passage de deux couches centrales appariées (104, 144, 304, 344).

3. Procédé selon la revendication 1, **caractérisé en ce que** ladite étape a) comprend de faire passer ladite première couche extérieure (2) appariée à une première couche centrale (202).

4. Procédé selon la revendication 1, **caractérisé en ce que** ladite étape a) comprend de faire passer ladite première couche extérieure (2) appariée à une première couche centrale (302) et ladite étape b) comprend de faire passer une seconde (304) et une troisième couche centrale (344) qui sont appariées.

5. Procédé selon une ou plusieurs des revendications 1-4, **caractérisé en ce que** lesdites étapes a) et d) sont prévues sans ledit premier rouleau en acier (10) étant aligné avec ledit second rouleau en acier (15), c'est-à-dire avec un enregistrement aléatoire ou DERL.

6. Procédé selon une ou plusieurs des revendications 1-4, **caractérisé en ce que** lesdites étapes a) et d) sont prévues avec ledit premier rouleau en acier (10) aligné avec ledit second rouleau en acier (15), avec un système «pin to pin».
